# FASCICULE DE BREVET EUROPEEN

(11) **EP 3 881 729 B1**
(45) Date de publication et mention de la délivrance du brevet: **17.01.2024**
(21) Numéro de dépôt: 21160503.5
(22) Date de dépôt: 03.03.2021
(51) Int. Cl.: A47J 31/42

(54) **MACHINE À CAFÉ MUNIE D'UN DISPOSITIF DE PRÉALERTE ET D'ALERTE DE MANQUE DE GRAINS**
KAFFEEMASCHINE, DIE MIT EINER FRÜHWARN- UND WARNVORRICHTUNG FÜR DAS FEHLEN VON KAFFEEBOHNEN AUSGESTATTET IST
COFFEE MACHINE PROVIDED WITH A DEVICE FOR PRE-ALERT AND ALERT OF LACK OF BEANS

(30) Priorité: 12.03.2020 FR 2002470
(43) Date de publication de la demande: 22.09.2021
(73) Titulaire: SEB S.A., 69130 Ecully (FR)
(72) Inventeur: GUEZOU, Charly, 22560 TREBEURDEN (FR); MAUNOURY, Damien, 53470 CHALONS DU MAINE (FR); MARCOLINI, Benjamin, 49460 MONTREUIL JUIGNE (FR)
(74) Mandataire: SEB Développement

(56) Documents cités:
- EP-A1- 2 393 405
- WO-A1-2018/219878
- DE-U1- 20 300 850
- US-A- 5 207 148

## Description

La présente invention se rapporte au domaine technique général des machines à café automatiques comportant un bac à grains de café pour alimenter un broyeur de grains de café, plus particulièrement une machine à café automatique comportant un bac à grains de café muni d'un dispositif de détection d'un niveau de grains de café
Il est connu du document EP1903519 une machine à café automatique comportant un circuit de commande et un bac à grains de café agencé au-dessus d'un broyeur à grains de café. Le bac à grains de café comporte un dispositif de détection d'un niveau bas de grains de café qui génère et transmet au circuit de commande un signal de manque de grains de café lorsque le niveau bas est atteint.

Cependant, l'utilisateur peut ignorer le signal de manque de grains et lancer la préparation de cafés jusqu'à ce que le bac à grains et le broyeur soient vides. Ainsi, le dernier café lancé ne comporte pas une dose de café complète et le gout de ce café ne correspondra pas au résultat attendu par l'utilisateur.

De plus, la machine à café automatique peut réaliser un nombre de café très faible lorsque le signal de manque de grains a été émis, ce qui implique que l'utilisateur doit être très réactif pour remplir le bac de grains de café.

Il est également connu des document DE20300850, WO2018219878 et EP2393405 une machine à café automatique comportant un bac à grains de café muni d'un dispositif de détection d'au moins un niveau de grains de café.

Le but de la présente invention est de remédier aux inconvénients précités et de proposer une machine à café automatique qui présente une mise en oeuvre simple et ergonomique avec un résultat en tasse garanti.

Un autre but de la présente invention est de proposer une machine à café automatique qui présente une conception simple et qui soit économique à mettre en oeuvre.

Ces buts sont atteints avec une machine à café automatique comportant un circuit de commande et un bac à grains de café muni d'une paroi de fond agencée au-dessus d'un broyeur à grains de café, ladite machine à café automatique comportant un dispositif de détection d'un niveau bas de grains de café dans le bac à grains de café qui génère et transmet au circuit de commande un signal de manque de grains de café lorsque le niveau bas est atteint, caractérisée en ce que le dispositif de détection génère et transmet au circuit de commande un signal de réapprovisionnement de grains de café lorsqu'un niveau intermédiaire, supérieur au niveau bas, est atteint, le circuit de commande comportant un dispositif d'alerte configuré pour émettre le signal de réapprovisionnement de grains de café et le signal de manque de grains de café vers l'utilisateur et en ce que le circuit de commande autorise le lancement de la réalisation d'un café bien que le signal de réapprovisionnement de grains de café ait été généré et interdit le lancement de la réalisation d'un café lorsque le signal de manque de grains a été généré.

Par niveau intermédiaire, supérieur au niveau bas, on comprend que le niveau intermédiaire est compris entre un niveau haut de grains de café correspondant au remplissage maximum du bac à grains de café et le niveau bas.

On considère que les grains de café se comportent dans le bac à grains de café sensiblement comme un liquide et que les différents niveaux passent par des plans horizontaux.

Ainsi, le circuit de commande n'autorise le lancement d'un café que si le bac à grains de café contient suffisamment de grains de café pour réaliser ce café.

On comprend que le dispositif de détection peut retarder l'émission du signal de manque de grains d'un ou plusieurs cafés si une quantité résiduelle de grains de café située sous le niveau bas permet la réalisation d'un ou plusieurs cafés.

De manière avantageuse, le bac à grains de café présente un volume V de remplissage correspondant à un niveau haut et le bac à grains de café présente un volume Vi de remplissage correspondant au niveau intermédiaire, Vi étant inférieur à 0,4 V, de préférence inférieur à 0,3 V.

Ainsi, le dispositif de détection est configuré pour que l'utilisateur puisse lancer suffisamment de cafés entre l'émission du signal de réapprovisionnement de grains de café et l'émission du signal de manque de grains de café et ainsi, l'utilisateur dispose d'un temps de réaction suffisant et confortable pour réapprovisionner le bac à grains de café.

Avantageusement, le dispositif de détection comporte un capteur de niveau bas et un capteur de niveau intermédiaire, le capteur de niveau bas et le capteur de niveau intermédiaire détectant chacun un niveau discret.

Les capteurs de niveau bas et de niveau intermédiaire sont agencés pour détecter chacun un seul niveau et ainsi émettre un signal fiable et répétitif dans le temps.

De préférence, les capteurs de niveau bas et de niveau intermédiaire sont des cellules photoélectriques.

Les cellules photoélectriques ou capteurs optiques sont des composants standards et bon marché, ce qui rend la construction du dispositif de détection particulièrement économique.

Avantageusement, les capteurs de niveau bas et de niveau intermédiaire comportent chacun un émetteur optique, un récepteur optique, un guide optique émetteur et un guide optique récepteur.

De préférence, le bac à grain de café comporte une paroi de fond, les guides optiques émetteur et récepteur étant agencés sous la paroi de fond.

Avantageusement, le circuit de commande comporte un circuit annexe qui comporte les émetteurs optiques et les récepteurs optiques.

De préférence, les guides optiques émetteurs et récepteurs et le circuit annexe sont agencés sous la paroi de fond du bac à grains de café.

Ainsi, la position du circuit annexe est déterminée pour optimiser la longueur des guides optiques émetteur et récepteur.

Avantageusement, la paroi de fond comporte des premier et deuxième logements de réception des guides optiques émetteur et récepteur du capteur de niveau bas, agencés dans un plan horizontal définissant le niveau bas et la paroi de fond comporte des premier et deuxième logements de réception des guides optiques émetteur et récepteur du capteur de niveau intermédiaire, agencés dans un plan horizontal définissant le niveau intermédiaire.

Avantageusement, la paroi de fond comporte une ouverture pour le transfert des grains de café vers le broyeur, le capteur de niveau bas générant un faisceau lumineux agencé au-dessus de l'ouverture.

Ainsi, le capteur de niveau bas est agencé juste au dessus du broyeur. Le volume disponible dans un espace du bac à grains de café situé entre le capteur de niveau bas et le broyeur est réduit et correspond à une quantité résiduelle de grains de café dans le bac à grains de café inférieure à la quantité de grains de café nécessaire pour réaliser un café.

De manière avantageuse, la paroi de fond prend une forme d'entonnoir qui converge vers l'ouverture qui alimente le broyeur en grains de café.

Avantageusement, le circuit de commande active le dispositif de détection lors du lancement de la réalisation d'un café.

Ainsi, les grains de café sont stables et ne sont pas soumis à des vibrations émises, notamment par le broyeur pour permettre une détection fiable du niveau bas et du niveau intermédiaire.

De préférence, le dispositif d'alerte du circuit de commande comporte un afficheur configuré pour afficher un premier pictogramme lorsque le dispositif de détection émet le signal de réapprovisionnement de grains de café et un deuxième pictogramme lorsque le dispositif de détection émet le signal de manque de grains de café.

Ainsi, lorsque le premier pictogramme correspondant au signal de réapprovisionnement de grains de café est affiché, l'utilisateur est invité à réapprovisionner le bac à grains de café, la machine à café restant opérationnelle pour réaliser un ou plusieurs cafés. Lorsque le deuxième pictogramme correspondant au signal de manque de grains de café est affiché, la machine à café est bloquée et l'utilisateur doit réapprovisionner le bac à grains de café pour lancer la réalisation d'un café.

L'invention sera mieux comprise à l'étude du mode de réalisation pris à titre nullement limitatif et illustré dans les figures annexées dans lesquelles :
[Fig. 1] La figure 1 illustre une vue en perspective d'une machine à café automatique munie d'un bac à grains de café muni d'un dispositif de détection d'un niveau de grains de café selon un mode particulier de réalisation de l'invention.
[Fig. 2] La figure 2 illustre une vue en coupe selon la ligne II-II du bac à grains de café et du broyeur à grains de café de la machine à café automatique illustrée sur la figure 1.
[Fig. 3] La figure 3 illustre une vue du dessous selon une direction III, en perspective du bac à grains de café muni du dispositif de détection d'un niveau de grains de café de la machine à café automatique illustrée sur la figure 2.

On notera que, dans ce document, les termes «horizontal», «vertical», «inférieur», «supérieur», «longitudinal», «transversal», «haut», «bas», employés pour décrire la machine à café automatique font référence à cette machine reposant sur un plan de travail, en situation d'usage.

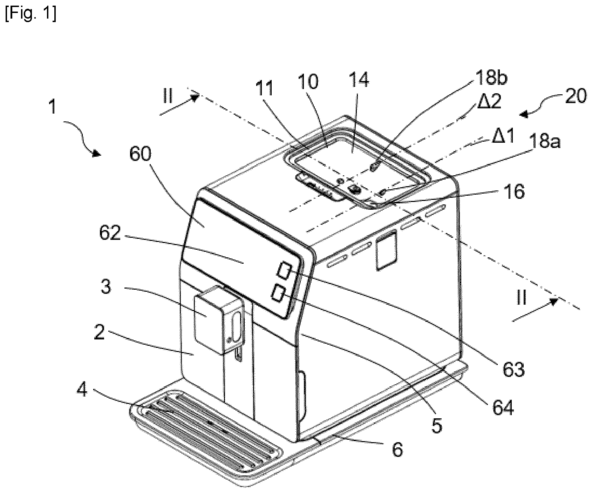

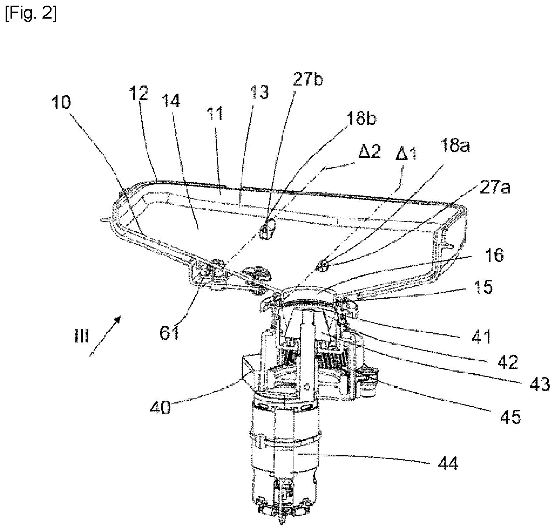

Dans l'exemple de réalisation représenté aux figures 1 à 3, une machine à café automatique 1 comporte un bâti 5 muni d'une base 6 destinée à reposer sur un plan de travail. Le bâti 5 comporte un bac à grains de café 10 et un broyeur 40 de grains de café (fig.2). Le broyeur 40 est alimenté en grains de café par le bac à grains de café 10 pour fournir de la mouture de café à un dispositif d'infusion (non représenté sur les figures). La machine à café automatique 1 comporte également une tête de distribution 3 du café reliée fluidiquement au dispositif d'infusion. La tête de distribution 3 est agencée au-dessus d'un repose tasse 4 et elle est montée mobile en translation verticale pour permettre à un utilisateur d'ajuster la position des sorties de café à la hauteur de la tasse. La machine à café automatique 1 comporte un réservoir 2 formant une alimentation en eau froide d'une chaudière appartenant au dispositif d'infusion.

Le bac à grains de café 10 comporte une paroi latérale 11 qui, dans un plan de coupe horizontal présente une section rectangulaire. La paroi latérale 11 comporte une extrémité libre supérieure 12 qui est coiffée par un couvercle amovible (non représenté sur les figures) et une extrémité inférieure 13. Le bac à grain de café 10 comporte une paroi de fond 14 qui s'étend vers le bas à partir de l'extrémité inférieure 13 vers une ouverture 16 d'un conduit tubulaire 15. L'ouverture 16 est comprise dans un plan horizontal. La paroi de fond 14 prend ainsi une forme d'entonnoir qui converge vers l'ouverture 16. La paroi de fond 14 se termine par le conduit tubulaire 15 qui est agencé verticalement au-dessus d'une entrée 41 du broyeur 40 à grains de café (Fig. 2). Le broyeur 40 comporte une meule fixe 42 et une meule mobile 43 qui est entrainée en rotation par un moteur 44 et un train d'engrenages 45.

La machine à café automatique 1 comporte un circuit de commande 60 pour la commande et la gestion des cycles de préparation des boissons infusées, notamment du café. Le circuit de commande 60 comporte un dispositif de détection 20 d'un niveau bas de grains de café et d'un niveau intermédiaire, supérieur au niveau bas, dans le bac à grains de café 10. Le niveau intermédiaire est compris entre un niveau haut correspondant au bac à grains de café rempli au maximum et le niveau bas correspondant au bac à grains de café contenant une quantité de grains de café inférieure à la quantité de grains de café nécessaire à la réalisation d'un café. Le dispositif de détection 20 génère et transmet au circuit de commande 60 un signal de réapprovisionnement de grains de café lorsque le niveau intermédiaire est détecté. Le dispositif de détection 20 génère et transmet au circuit de commande 60 un signal de manque de grains de café lorsque le niveau bas est détecté.

Le circuit de commande 60 interdit le lancement de la réalisation d'un café lorsque le signal de manque de grains a été généré. Cependant, le circuit de commande 60 autorise le lancement de la réalisation d'un café même si le signal de réapprovisionnement de grains de café a été généré.

Le bac à grains de café 10 présente un volume V de remplissage correspondant au niveau haut. Lorsque le dispositif de détection 20 émet le signal de réapprovisionnement, le bac à grains de café présente un volume Vi de remplissage correspondant au niveau intermédiaire. Le volume Vi de remplissage correspond à 33% du volume V de remplissage.

Le dispositif de détection 20 comporte un capteur de niveau bas 21a adapté pour détecter le niveau bas et un capteur de niveau intermédiaire 21b adapté pour détecter le niveau intermédiaire. Les capteurs de niveau bas 21a et de niveau intermédiaire 21b sont des cellules photoélectriques.

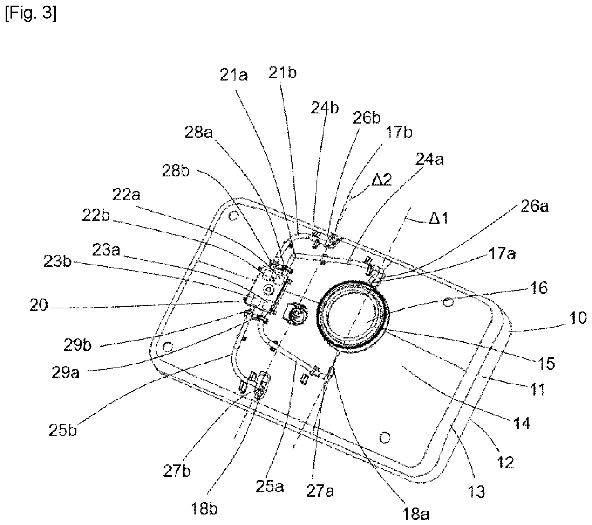

Tel que visible à la figure 3, le capteur de niveau bas 21a comporte un émetteur optique 22a, un récepteur optique 23a, un guide optique émetteur 24a et un guide optique récepteur 25a. La paroi de fond 14 du bac à grains de café 10 comporte un premier logement 17a de réception d'une extrémité libre 26a du guide optique émetteur 24a et un deuxième logement 18a de réception d'une extrémité libre 27a du guide optique récepteur 25a. Les premier 17a et deuxième 18a logements sont agencés à proximité de l'ouverture 16 et alignés selon un axe Δ1. L'axe Δ1 est positionné au-dessus de l'ouverture 16, dans un plan horizontal définissant le niveau bas. Les premier 17a et deuxième 18a logements sont agencés de manière traversante dans la paroi de fond 14. Le guide optique émetteur 24a comporte une extrémité 28a qui coopère avec l'émetteur optique 22a et le guide optique récepteur 25a comporte une extrémité 29a qui coopère avec le récepteur optique 23a. Le guide optique émetteur 24a et le guide optique récepteur 25a sont agencés sous et contre la paroi de fond 14. Lorsque le niveau de grains de café passe sous l'axe Δ1, l'extrémité libre 27a du guide optique récepteur 25a reçoit un faisceau lumineux émis par l'extrémité libre 26a du guide optique émetteur 24a. Le faisceau lumineux est conduit jusqu'au récepteur optique 23a qui génère le signal de manque de grains de café.

Le capteur de niveau intermédiaire 21b comporte un émetteur optique 22b, un récepteur optique 23b, un guide optique émetteur 24b et un guide optique récepteur 25b. La paroi de fond 14 du bac à grains de café 10 comporte un premier logement 17b de réception d'une extrémité libre 26b du guide optique émetteur 24b et un deuxième logement 18b de réception d'une extrémité libre 27b du guide optique récepteur 25b. Les premier 17b et deuxième 18b logements sont agencés à proximité de l'ouverture 16 et alignés selon un axe Δ2. L'axe Δ2 est positionné dans un plan horizontal définissant le niveau intermédiaire. Les premier 17b et deuxième 18b logements sont agencés de manière traversante dans la paroi de fond 16. Le guide optique émetteur 24b comporte une extrémité 28b qui coopère avec l'émetteur optique 22b et le guide optique récepteur 25b comporte une extrémité 29b qui coopère avec le récepteur optique 23b. Le guide optique émetteur 24b et le guide optique récepteur 25b sont agencés sous et contre la paroi de fond 14. Lorsque le niveau de grains de café passe sous l'axe Δ2, l'extrémité libre 27b du guide optique récepteur 25b reçoit un faisceau lumineux émis par l'extrémité libre 26b du guide optique émetteur 24b. Le faisceau lumineux est conduit jusqu'au récepteur optique 23b qui génère le signal de réapprovisionnement de grains de café.

Le circuit de commande 60 comporte un circuit annexe 61 qui est agencé sous la paroi de fond 14, de manière déportée par rapport à l'ouverture 16. Le circuit annexe 61 comporte l'émetteur optique 22a et le récepteur optique 23a du capteur de niveau bas 21a ainsi que l'émetteur optique 22b et le récepteur optique 23b du capteur de niveau intermédiaire 21b.

Conformément à la figure 1, le circuit de commande 60 comporte un afficheur 62 qui comprend des premier 63 et deuxième 64 pictogrammes. Le circuit de commande 60 affiche sur l'afficheur 62 le premier pictogramme 63 lorsque le signal de réapprovisionnement de grains de café est émis par le dispositif de détection 20. Le circuit de commande 60 affiche sur l'afficheur 62 le deuxième pictogramme 64 lorsque le signal de manque de grains de café est émis par le dispositif de détection 20. Le circuit de commande 60 peut comporter un organe sonore pouvant générer une alerte sonore en même temps que le deuxième pictogramme 64 correspondant au signal de manque de grains, est affiché.

En fonctionnement, l'utilisateur qui souhaite réaliser un café, vérifie que l'afficheur 62 n'affiche ni le premier pictogramme 63 correspondant au signal de réapprovisionnement de grains de café, ni le deuxième pictogramme 64 correspondant au signal de manque de grains. Il peut alors lancer la réalisation d'un café à l'aide du circuit de commande (60). Si lors de la réalisation du café, le niveau de grains de café passe sous l'axe Δ2, le capteur de niveau intermédiaire (21b) génère le signal de réapprovisionnement de grains de café qui entraine l'affichage du premier pictogramme 63 sur l'afficheur 62. L'utilisateur qui souhaite réaliser d'autres cafés peut ignorer l'affichage du premier pictogramme 63 correspondant au signal de réapprovisionnement de grains de café et lancer la réalisation d'autres cafés. Lorsque le niveau de grains de café passe sous l'axe Δ1, le capteur de niveau bas 21a génère le signal de manque de grains de café qui entraine l'affichage du deuxième pictogramme 64 sur l'afficheur 62. Si l'utilisateur ignore l'affichage du deuxième pictogramme 64 correspondant au signal de manque de grains de café et veut lancer la réalisation d'un café, le circuit de commande 60 interdit la réalisation du café. L'utilisateur doit verser des grains de café dans le bac à grains de café 10 pour atteindre un niveau de remplissage supérieur au niveau bas, de préférence supérieur au niveau intermédiaire pour pouvoir lancer la réalisation d'un café.

Bien entendu, l'invention n'est nullement limitée aux modes de réalisation décrits et illustrés qui n'ont été donnés qu'à titre d'exemples. Des modifications restent possibles, notamment du point de vue de la constitution des divers éléments tant que celles-ci restent dans le cadre des revendications.

Dans une variante de réalisation, le dispositif de détection 20 comporte un capteur qui détecte le niveau de grains de café de manière continue.

## Revendications

1. Machine à café automatique (1) comportant un circuit de commande (60) et un bac à grains de café (10) muni d'une paroi de fond (14) agencée au-dessus d'un broyeur (40) à grains de café, ladite machine à café automatique (1) comportant un dispositif de détection (20) d'un niveau bas de grains de café dans le bac à grains de café (10) qui génère et transmet au circuit de commande (60) un signal de manque de grains de café lorsque le niveau bas est atteint, le circuit de commande (60) interdisant le lancement de la réalisation d'un café lorsque le signal de manque de grains a été généré, **caractérisée en ce que** le dispositif de détection (20) génère et transmet au circuit de commande (60) un signal de réapprovisionnement de grains de café lorsqu'un niveau intermédiaire, supérieur au niveau bas, est atteint, le circuit de commande (60) comportant un dispositif d'alerte (62, 63, 64) configuré pour émettre le signal de réapprovisionnement de grains de café et le signal de manque de grains de café vers l'utilisateur, et **en ce que** le circuit de commande (60) autorise le lancement de la réalisation d'un café bien que le signal de réapprovisionnement de grains de café ait été généré.

2. Machine à café automatique (1) selon la revendication 1, **caractérisée en ce que** le bac à grains de café (10) présente un volume V de remplissage correspondant à un niveau haut de grains de café et **en ce que** le bac à grains de café (10) présente un volume Vi de remplissage correspondant au niveau intermédiaire, Vi étant inférieur à 0,4V, de préférence inférieur à 0,3V.

3. Machine à café automatique (1) selon l'une quelconque des revendications 1 à 2, **caractérisée en ce que** le dispositif de détection (20) comporte un capteur de niveau bas (21a) et un capteur de niveau intermédiaire (21b), le capteur de niveau bas (21a) et le capteur de niveau intermédiaire (21b) détectant chacun un niveau discret.

4. Machine à café automatique (1) selon la revendication 3, **caractérisée en ce que** les capteurs de niveau bas (21a) et de niveau intermédiaire (21b) sont des cellules photoélectriques.

5. Machine à café automatique (1) selon la revendication 4, **caractérisée en ce que** les capteurs de niveau bas (21a) et de niveau intermédiaire (21b) comportent chacun un émetteur optique (22a, 22b), un récepteur optique (23a, 23b), un guide optique émetteur (24a, 24b) et un guide optique récepteur (25a, 25b).

6. Machine à café automatique (1) selon la revendication 5, **caractérisée en ce que** le circuit de commande (60) comporte un circuit annexe (61) qui comporte les émetteurs optiques (22a, 22b) et les récepteurs optiques (23a, 23b).

7. Machine à café automatique (1) selon la revendication 6, **caractérisée en ce que** les guides optiques émetteurs (24a, 24b) et récepteurs (25a, 25b) et le circuit annexe (61) sont agencés sous la paroi de fond (14) du bac à grains de café (10).

8. Machine à café automatique (1) selon la revendication 7, **caractérisée en ce que** la paroi de fond (14) comporte des premier (17a) et deuxième logements (18a) de réception des guides optiques émetteur (24a) et récepteur (25a) du capteur de niveau bas (21a), agencés dans un plan horizontal définissant le niveau bas et **en ce que** la paroi de fond (14) comporte des premier (17b) et deuxième (18b) logements de réception des guides optiques émetteur (24b) et récepteur (25b) du capteur de niveau intermédiaire (21b), agencés dans un plan horizontal définissant le niveau intermédiaire.

9. Machine à café automatique (1) selon l'une quelconque des revendications 3 à 8, **caractérisée en ce que** la paroi de fond (14) comporte une ouverture (16) pour le transfert des grains de café vers le broyeur (40), le capteur de niveau bas (21a) générant un faisceau lumineux agencé au-dessus de l'ouverture (16).

10. Machine à café automatique (1) selon l'une quelconque des revendications 1 à 9, **caractérisée en ce que** le circuit de commande (60) active le dispositif de détection (20) lors du lancement de la réalisation d'un café.

11. Machine à café automatique (1) selon l'une quelconque des revendications 1 à 10, **caractérisée en ce que** le dispositif d'alerte de circuit de commande (60) comporte un afficheur (62) configuré pour afficher un premier pictogramme (63) lorsque le dispositif de détection (20) émet le signal de réapprovisionnement de grains de café et un deuxième pictogramme (64) lorsque le dispositif de détection (20) émet le signal de manque de grains de café.

## Patentansprüche

1. Automatische Kaffeemaschine (1), die eine Steuerschaltung (60) und einen Kaffeebohnenbehälter (10) aufweist, der mit einer Bodenwand (14) versehen ist, die über einem Mahlwerk (40) für Kaffeebohnen angeordnet ist, wobei die automatische Kaffeemaschine (1) eine Erkennungsvorrichtung (20) für einen niedrigen Kaffeebohnenstand im Kaffeebohnenbehälter (10) aufweist, die ein Kaffeebohnenmangelsignal erzeugt und an die Steuerschaltung (60) sendet, wenn der Niedrigstand erreicht ist, wobei die Steuerschaltung (60) den Start der Zubereitung eines Kaffees unterbindet, wenn das Bohnenmangelsignal erzeugt wurde, **dadurch gekennzeichnet, dass** die Erkennungsvorrichtung (20) ein Kaffeebohnennachfüllsignal erzeugt und an die Steuerschaltung (60) sendet, wenn ein Zwischenstand, der höher als der Niedrigstand ist, erreicht wird, wobei die Steuerschaltung (60) eine Warnvorrichtung (62, 63, 64) aufweist, die dazu konfiguriert ist, das Kaffeebohnennachfüllsignal und das Kaffeebohnenmangelsignal an den Benutzer zu senden, und dass die Steuerschaltung (60) den Start der Zubereitung eines Kaffees autorisiert, obwohl das Kaffeebohnennachfüllsignal generiert worden ist.

2. Automatische Kaffeemaschine (1) nach Anspruch 1, **dadurch gekennzeichnet, dass** der Kaffeebohnenbehälter (10) ein Füllvolumen V aufweist, das einem hohen Stand der Kaffeebohnen entspricht, und dass der Kaffeebohnenbehälter (10) ein Füllvolumen Vi aufweist, das dem Zwischenstand entspricht, wobei Vi kleiner als 0,4V, vorzugsweise kleiner als 0,3V, ist.

3. Automatische Kaffeemaschine (1) nach einem der Ansprüche 1 bis 2, **dadurch gekennzeichnet, dass** die Erkennungsvorrichtung (20) einen Niedrigstandsensor (21a) und einen Zwischenstandsensor (21 b) aufweist, wobei der Niedrigstandsensor (21a) und der Zwischenstandsensor (21b) jeweils einen diskreten Stand erkennen.

4. Automatische Kaffeemaschine (1) nach Anspruch 3, **dadurch gekennzeichnet, dass** die Niedrigstandsensoren (21a) und Zwischenstandsensoren (21b) photoelektrische Zellen sind.

5. Automatische Kaffeemaschine (1) nach Anspruch 4, **dadurch gekennzeichnet, dass** der Niedrigstandsensor (21a) und der Zwischenstandsensor (21b) jeweils einen optischen Sender (22a, 22b), einen optischen Empfänger (23a, 23b), einen optischen Senderleiter (24a, 24b) und einen optischen Empfängerleiter (25a, 25b) aufweisen.

6. Automatische Kaffeemaschine (1) nach Anspruch 5, **dadurch gekennzeichnet, dass** die Steuerschaltung (60) eine Nebenschaltung (61) aufweist, die die optischen Sender (22a, 22b) und die optischen Empfänger (23a, 23b) aufweist.

7. Automatische Kaffeemaschine (1) nach Anspruch 6, **dadurch gekennzeichnet, dass** die optischen Sender- (24a, 24b) und Empfängerleiter (25a, 25b) und die Nebenschaltung (61) unterhalb der Bodenwand (14) des Kaffeebohnenbehälters (10) angeordnet sind.

8. Automatische Kaffeemaschine (1) nach Anspruch 7, **dadurch gekennzeichnet, dass** die Bodenwand (14) eine erste (17a) und eine zweite Kammer (18a) zur Aufnahme des optischen Sender- (24a) und Empfängerleiters (25a) des Niedrigstandsensors (21a) aufweist, die in einer horizontalen Ebene angeordnet sind, die den Niedrigstand definiert, und dass die Bodenwand (14) eine erste (17b) und eine zweite (18b) Aufnahmekammer des optischen Sender- (24b) und Empfängerleiters (25b) des Zwischenstandsensors (21b) aufweist, die in einer horizontalen Ebene angeordnet sind, die den Zwischenstand definiert.

9. Automatische Kaffeemaschine (1) nach einem der Ansprüche 3 bis 8, **dadurch gekennzeichnet, dass** die Bodenwand (14) eine Öffnung (16) für den Transfer der Kaffeebohnen zum Mahlwerk (40) aufweist, wobei der Niedrigstandsensor (21a) einen Lichtstrahl erzeugt, der oberhalb der Öffnung (16) angeordnet ist.

10. Automatische Kaffeemaschine (1) nach einem der Ansprüche 1 bis 9, **dadurch gekennzeichnet, dass** die Steuerschaltung (60) die Erkennungsvorrichtung (20) beim Start der Zubereitung eines Kaffees aktiviert.

11. Automatische Kaffeemaschine (1) nach einem der Ansprüche 1 bis 10, **dadurch gekennzeichnet, dass** die Warnvorrichtung der Steuerschaltung (60) eine Anzeige (62) aufweist, die dazu konfiguriert ist, ein erstes Piktogramm (63) anzuzeigen, wenn die Erkennungsvorrichtung (20) das Kaffeebohnennachfüllsignal aussendet, und ein zweites Piktogramm (64) anzuzeigen, wenn die Erkennungsvorrichtung (20) das Kaffeebohnenmangelsignal aussendet.

## Claims

1. Automatic coffee machine (1) comprising a control circuit (60) and a coffee bean container (10) provided with a bottom wall (14) arranged above a coffee bean grinder (40), said automatic coffee machine (1) comprising a device (20) for detecting a low coffee bean level in the coffee bean container (10) which generates and transmits to the control circuit (60), a signal of lack of beans when the low level is reached, the control circuit (60) prohibiting the starting of making a coffee, when the signal of lack of beans has been generated, **characterized in that** the detection device (20) generates and transmits to the control circuit (60), a coffee bean replenishment signal when an intermediate level, greater than the low level, is reached, the control circuit (60) comprising an alert device (62, 63, 64) configured to emit the coffee bean replenishment signal and the signal of lack of coffee beans to the user, and **in that** the control signal (60) enables the starting of making a coffee, although the coffee bean replenishment signal has been generated.

2. Automatic coffee machine (1) according to claim 1, **characterized in that** the coffee bean container (10) has a filling volume V corresponding to a high coffee bean level, and **in that** the coffee bean container (10) has a filling volume Vi corresponding to the intermediate level, Vi being less than 0.4V, preferably less than 0.3V.

3. Automatic coffee machine (1) according to any one of claims 1 to 2, **characterized in that** the detection device (20) comprises a low level sensor (21a) and an intermediate level sensor (21b), the low level sensor (21a) and the intermediate level sensor (21b) each detecting a discrete level.

4. Automatic coffee machine (1) according to claim 3, **characterized in that** the low level (21a) and intermediate level (21b) sensors are photoelectric cells.

5. Automatic coffee machine (1) according to claim 4, **characterized in that** the low level (21a) and intermediate level (21b) sensors each comprise an optical emitter (22a, 22b), an optical receiver (23a, 23b), an emitting optical guide (24a, 24b) and a receiving optical guide (25a, 25b).

6. Automatic coffee machine (1) according to claim 5, **characterized in that** the control circuit (60) comprises an attachment circuit (61) which comprises the optical emitters (22a, 22b) and the optical receivers (23a, 23b).

7. Automatic coffee machine (1) according to claim 6, **characterized in that** the emitting optical guides (24a, 24b) and receivers (25a, 25b) and the attachment circuit (61) are arranged under the bottom wall (14) of the coffee bean container (10).

8. Automatic coffee machine (1) according to claim 7, **characterized in that** the bottom wall (14) comprises first (17a) and second housings (18a) for receiving emitting (24a) and receiving (25a) optical guides of the low level sensor (21a), arranged in a horizontal plane defining the low level and **in that** the bottom wall (14) comprises first (17b) and second (18b) housings for receiving emitting (24b) and receiving (25b) optical guides of the intermediate level sensor (21b), arranged in a horizontal plane defining the intermediate level.

9. Automatic coffee machine (1) according to any one of claims 3 to 8, **characterized in that** the bottom wall (14) comprises an opening (16) for the transfer of coffee beans to the grinder (40), the low level sensor (21a) generating a light beam arranged above the opening (16).

10. Automatic coffee machine (1) according to any one of claims 1 to 9, **characterized in that** the control circuit (60) activates the detection device (20) during the starting of making a coffee.

11. Automatic coffee machine (1) according to any one of claims 1 to 10, **characterized in that** the control circuit (60) alert device comprises a display unit (62) configured to display a first icon (63) when the detection device (20) emits the coffee bean replenishment signal and a second icon (64) when the detection device (20) emits the signal of lack of coffee beans.
